Europäisches Patentamt

European Patent Office

Office européen des brevets

(11) Publication number: **0 241 763**
**A2**

# (12) EUROPEAN PATENT APPLICATION

(21) Application number: **87104221.4**

(22) Date of filing: **22.03.87**

(51) Int. Cl.4: **A01J 5/12**

(30) Priority: **15.04.86 IT 4681586**

(43) Date of publication of application:
**21.10.87 Bulletin 87/43**

(84) Designated Contracting States:
**AT BE CH DE ES FR GB LI LU NL**

(71) Applicant: **INTERPULS S.n.C. di Ligabue & C.**
**Via Maria Melato, 4**
**I-42020 Montecavolo (Reggio Emilia)(IT)**

(72) Inventor: **Ligabue, Luigi**
**Via Maria Melato, 4**
**I-42020 Montecavolo Reggio Emilia(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Automatic pulsator apparatus for milking.**

(57) The passage apertures (10, 36) are each sur-
rounded upstream and downstream by two defor-
mable sealed covers (8, 11; 13, 34), the two inner
mutually facing covers (11, 13) being mechanically
connected together (12), whereas the two outer cov-
ers (8, 34) are free and are subjected alternately to a
vacuum which pulls them outwards.

Fig. 1

## AUTOMATIC PULSATOR APPARATUS FOR MILKING

This invention relates to a pulsator apparatus for automatic pneumatic milking plants, comprising two slide valves, of which a first (main valve) alternately connects two outlet conduits to a vacuum source, and the other controls the movements of the first, each of said valves being provided with operating means, the operating means relative to the first valve being alternately influenced by the vacuum source by way of the other valve and a passageway of predetermined cross-section.

In automatic milking plants, one of the key points, and perhaps the most important, is known to be the so-called "pulsator" apparatus. In this respect, in order to obtain optimum milking, this apparatus must operate at a constant rate of about sixty pulsations per minute, any increase or reduction in pulsation rate leading to imperfect milking with further negative consequences. Said known pulsators are operated by vacuum, which by way of slide valves is made to act alternately on the operating means, such as elastically deformable diaphragms, which drive the slide valves in one direction or the other, the pulsation or beat rate being fixed by passageways of predetermined cross-section. Practical operation has however shown that such passageways, which are necessarily of very small diameter, receive a build-up of dust, dirt or the like, which can also be moist to a certain extent, so that their free space becomes reduced, with a resultant slowing down in the operation of the pulsator, and a reduction in beat rate. Said slow-running drawback, ie a reduction in beat rate, is also influenced by the increase in friction caused by the more or less moist dust which infiltrates into the bushes of the shaft carrying the main slide valve, especially if these are tight.

In order to obviate or at least substantially reduce this serious drawback, pulsators have been designed in which the passageways concerned have a passage cross-section much greater than that required, which is then reduced by a constriction element such as an adjustable needle, so as to be able to intervene in good time and enlarge the passage cross-section whenever the pulsator tends to reduce its rate. This latter type of pulsator has given good results, because it can be adjusted on the spot immediately without any specific requirement for specialist technical personnel. Practical experience has however shown that its users actually adjust the constriction element not only when they consider that the beat rate is falling, but also when there is no need for adjustment, on the mistaken assumption that increasing the beat rate can save time or can result in better milking of the animal, etc.

The main object of the present invention is to provide a pulsator apparatus which maintains the precalculated beat or pulsation rate substantially constant, without the need for any external adjustment.

A further object is to attain the required result in a simple and economical manner.

A further object is to reduce maintenance to a minimum, this in effect being required only when a component needs replacing due to natural wear,

In a pulsator apparatus of the specified type, these objects are attained by providing each of the passageways of predetermined cross-section in a sealed environment defined by the operating means and by a deformable element.

The invention will be more apparent from the description given hereinafter of a preferred embodiment thereof, illustrated on the accompanying drawings, in which:

Figure 1 is a partly sectional longitudinal view from above showing the various conduits, but omitting both the slide track for the slide valves and the slides valves themselves;

Figure 2 is a partly sectional view from above, showing the plate forming the track along which the slide valves (here shown) are made to slide reciprocatingly, in said plate thereby being provided through apertures corresponding with the underlying conduits;

Figure 3 is a partial section on the line III-III of Figure 2, through one of the slide valves and the relative drive elements;

Figure 4 is a detailed section through a modified embodiment.

In a casing, indicated overall by A, there is provided a mouth 1 connected to a vacuum source. This mouth is connected to a channel 2 which extends along the centre of the casing in a central recessed zone B. A cover plate 4 of equal area is fixed in any known manner on the zone B. This plate comprises apertures 1A and 3 aligned with and at the ends of the channel 2.

A slide valve 5 in the shape of an inverted box and slidable in contact with the plate 4 connects the aperture 3 alternately to one or other aperture 6, 26 which are mutually aligned and provided in the plate 4. The aperture 6 communicates with a channel 7 which terminates in a variable-volume chamber 28 bounded by an elastically deformable diaphragm 8 clamped along its perimeter between an internal flange 50 of a lateral component 51 of the casing A and a cup-shaped member 52, which is mounted in that component and provided with a base or wall 9 in the centre of which there is an orifice 10.

The cup-shaped member 52 cooperates with the central component 53 of the casing A to also clamp the periphery of an elastically deformable diaphragm 11 fixed to one end of a shaft 12 and defining with the other diaphragm 8 a sealed mobile-wall environment 29 which contains the orifice 10. The components 51, 52, 53 of the casing A are connected together in any known manner.

The aperture 26 communicates by way of the channel 27 with a variable-volume chamber 38 bounded by an elastically deformable diaphragm 34 identical to the already described diaphragm 8 and also mounted in a symmetrically identical manner, ie by means of the flange 54 of a component 55 of the casing A and a cup-shaped member 56 with its base or wall 37 provided with a central orifice 36.

An elastically deformable diaphragm 13 is fixed to the other end of the shaft 12 and is secured peripherally between the intermediate element 53 and the component 55 of the casing A. Again in this case the orifice 36 is contained in a sealed environment 35.

A shaft 23 is fixed to the slide valve 5. An elastically deformable diaphragm 21, 22 is fixed to each free end of this shaft. Said diaphragms are secured peripherally between the central component 53 and the lateral components 51 and 55, respectively, of the casing A. These diaphragms divide a cylindrical space 60, 61 (lying between said components) into two variable-volume chambers 60A, B and 61A, B, the outer of which (ie the chambers 60A and 61B) are connected to channels 20 and 25 respectively. The channels 20 and 25 terminate at holes 19 and 24 in the plate 4. The shaft 23 slackly traverses bores 70 provided in the intermediate component 53.

The shaft 12 also slackly traverses bores 71 in said intermediate component, and bores 72 are provided to allow free air movement behind the diaphragms 11 and 13.

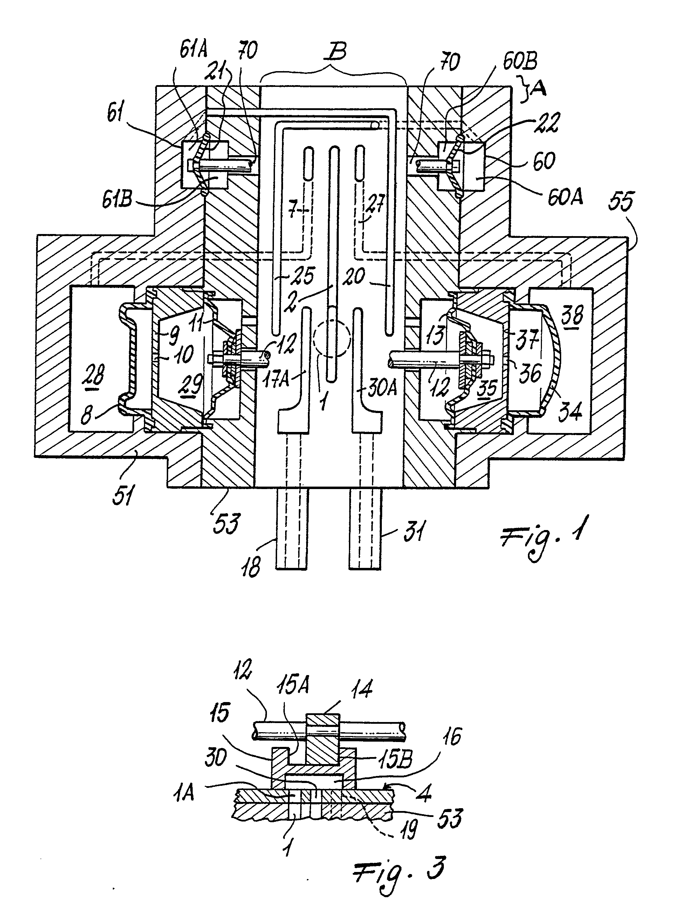

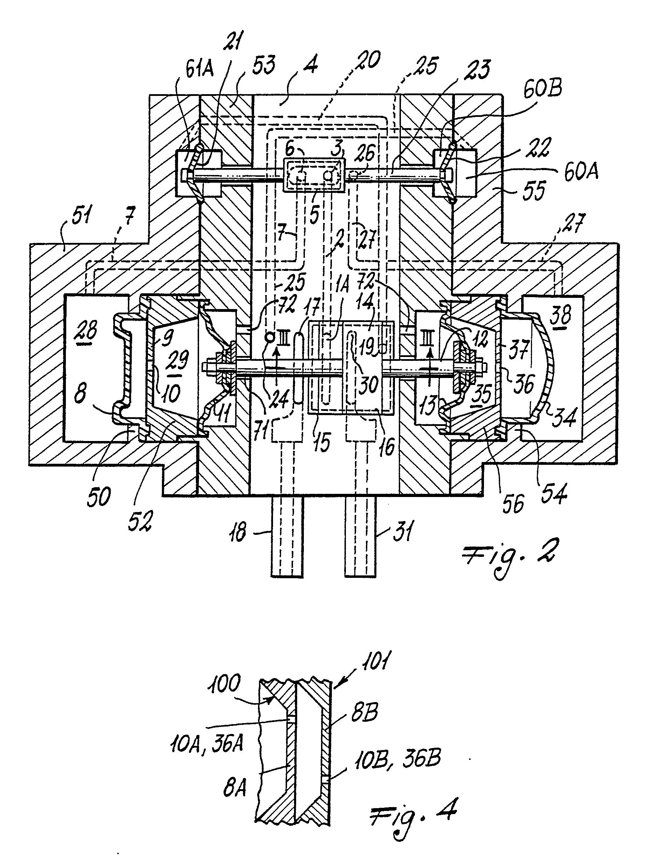

The shaft 12 (see Figure 3 in particular) is rigid with a block 14 arranged to slide between the walls 15A and 15B of a slide valve 15 before dragging this latter with it into its two end-of-travel positions.

The slide valve 15 rests and slides on the cover plate 4, and has the box shape shown on the figures, to define a chamber 16. In one of the end-of-travel positions (that of Figure 2), the slide valve 15 connects the vacuum source to the chamber 61A by way of the conduit 20. In this position, the slide valve 15 also connects the vacuum source to a hole 30 in the plate 4, this hole communicating by way of a channel 30A with the milking machine teat cups through a connector 31.

In its other end-of-travel position, the slide valve 15 connects the chamber 60A to the vacuum source through the hole 24 and the channel 25, and also to the milking machine teat cups associated with a connector 18, which communicates with the conduit 1 through a channel 17A which opens below the slide valve by way of an aperture 17 in the cover plate 4.

The operation is as follows: the vacuum source is connected to the mouth 1, for example by a suitable connector located on the lower side of the casing A and not shown on the drawing for simplicity. With the slide valves 5 and 15 disposed as in Figure 2 and with the vacuum source in operation, the suction passes from the mouth 1 to the channel 2, from the aperture 30 to the connector 31 which leads to the teat cups concerned, and from the aperture 19 to the chamber 61A so that the diaphragm 21 is pulled and deformed outwards, ie towards the left in Figures 1 and 2.

The slide valve 5 receives suction from the aperture 3 through the conduit 2, the suction then acting through the hole 6 provided in the cover plate 4, and in the conduit 7 which opens into the chamber 28 behind the diaphragm 8, which is therefore pulled outwards (towards the left in Figures 1 and 2). By virtue of its movement, this latter diaphragm simultaneously draws through the orifice 10 of the wall 9 the air contained on the right hand side of this latter, and thus the diaphragm 11 is also pulled in the same direction.

The result is that by way of the shaft 12, the diaphragm 11 causes the drive block 14 to move and this, on reaching the wall 15A of the slide valve 15, drags this latter to its end-of-travel position, so that the chamber 16 of said slide valve simultaneously embraces the apertures 17 and 24, with the result that the suction now acts on the teat cups connected to the connector 18, and behind the diaphragm 22, whereas the holes 30 and 19 are now uncovered so that suction ceases on the corresponding teat cups and on the diaphragm 21, but instead acts on the rear of the diaphragm 22 which is connected, as in the case of the diaphragm 21, to the shaft 23 to which the slide valve 5 is fixed.

This latter diaphragm is then pulled, so that the slide valve 5 moves over the hole 26 to influence the conduit 27, thus transferring the suction to the rear of the diaphragm 34, which deforms outwards to draw the air contained on the left hand side of the wall 37 through the orifice 36 in said wall 37, thus pulling the diaphragm 13 fixed to the shaft 12.

This movement is transmitted in the manner already illustrated but in the reverse direction to the slide valve 15, which returns to its initial position shown in Figure 2 so that the cycle commences again with reciprocating movement of the slide valve and alternate action of the vacuum on one or other of the teat cup assemblies associated with the connectors 18, 31.

The alternation rate is determined by the diameter of the orifices 10 and 36, which are equal, and which act substantially as a braking element for the passage of air through the relative wall 9, 37 in either direction, and as said orifices 10 and 36 are in an environment which is completely sealed on its two sides by the diaphragms 8, 11 and 13, 34 and sealed all around by the components which, overall, form the casing A of the pulsator apparatus, there is no contact with the external air, and therefore the orifices always remain completely clean, to ensure that the predetermined beat rate is maintained.

The fact that dust can collect in the conduits 7 and 27 has no influence on the rate of the pulsator as these conduits have much larger cross-sections than the orifices 10, 36, so that any important reduction in their cross-section could occur only after a very lengthy operating time.

As there is no need to use bushes, particularly of the tight-fitting type, for forming the passageways for the shaft 12 which drives the main slide valve 15, said passageways can be slack with the result that dust accumulation will not cause slowing-down, and friction remains substantially constant.

In modified embodiments, the chambers 29 and 35 instead of being filled with air are filled with fluid in either the liquid or gaseous state, for example inert fluid or dried air.

The deformable sealed covers 8, 11, 13, 34 can be in the form of extendable and retractable structures, for example of the bellows type. The invention also comprises an embodiment in which the walls, 9, 37 are integral with the covers 8, 34.

The invention also comprises the embodiment shown in Figure 4, in which the passageways 10, 36, instead of being formed from a single orifice, are formed from two orifices 10A, 10B and 36A, 36B disposed in two spaced-apart walls 8A, 8B and 37A, 37B pertaining to two members 100, 101 similar to the cup-shaped members 52, 56. These orifices are not coaxial.

## Claims

1. An automatic pulsator apparatus for milking, comprising two slide valves (5, 15), of which a first (15) (main valve) alternately connects two outlet conduits (18, 31) to a vacuum source, and the other valve (5) controls the movements of the first, each of said valves (5, 15) being provided with operating means (11, 13, 21, 22), the operating means (11, 13) relative to the first valve (15) being alternately influenced by the vacuum source by way of the other valve (5) and a passageway of predetermined cross-section (10, 36), characterised in that each of said passageways of predetermined cross-section (10, 36) is contained within a sealed environment (29, 35) defined by the operating means (11, 13) and by a deformable element (8, 34).

2. A pulsator apparatus as claimed in the preceding claim, characterised in that the operating means (11, 13, 21, 22) are represented by elastically deformable diaphragms.

3. A pulsator apparatus as claimed in claim 1, characterised in that the deformable elements (8, 34) consist of elements having a bellows side wall.

4. A pulsator apparatus as claimed in claim 1, characterised in that the deformable elements (8, 34) consist of elastically deformable diaphragms.

5. A pulsator apparatus as claimed in claim 1, characterised in that the passageway (10, 36) of predetermined cross-section is present in a part which is rigid but which forms part of the deformable elements (8, 34).

6. A pulsator apparatus as claimed in claim 1, characterised in that each passageway (10A, B and 36A, B) is formed from two ports provided in spaced-apart rigid walls (8A, B and 37A, B).

Fig. 1

Fig. 3

Fig. 2

Fig. 4